# EUROPÄISCHE PATENTANMELDUNG

(11) **EP 0 706 001 A1**
(43) Veröffentlichungstag der Anmeldung: **10.04.1996**
(21) Anmeldenummer: 95115214.9
(22) Anmeldetag: 27.09.1995
(51) Int. Cl.: F16J 15/32

(54) **Radialwellendichtung**

(30) Priorität: 28.09.1994 DE 4434573
(71) Anmelder: VR Dichtungen GmbH, D-52146 Würselen (DE)
(72) Erfinder: Kreutzer, Siegmar, D-52146 Würselen (DE)
(74) Vertreter: Stachow, E.-W., Prof. Dr.

(57) **Zusammenfassung**

Radialwellendichtungen mit einem Stützkörper und einer auf dem Stützkörper aufgezogenen Dichtmanschette, die eine Dichtmembran mit einer an einer Welle dichtend anliegenden, innerhalb der axialen Abmessung der Radialwellendichtung angeordneten Dichtlippe aufweist, die entgegen der Druckrichtung des abzudichtenden Mediums schräg gestellt ist, wobei der Stützkörper an der die schräg gestellte Dichtlippe aufweisenden Seite der Dichtmembran angeordnet ist, werden erfindungsgemäß dadurch weitergebildet, daß eine die Dichtmanschette (2) gegen den Mediendruck abstützende Druckabstützung (6) vorgesehen ist, die axial fixiert an der von der Dichtlippe (3) abgewandten Seite in der Dichtmanschette (2) integriert ist. Hierdurch liegt eine Radialwellendichtung als kompaktes Bauteil vor, bei der stets eine sichere Druckabstützung in der die Dichtlippe aufweisenden Dichtmembran gegeben ist, wobei zugleich der Montageaufwand deutlich verringert ist und Passungs- und damit Dichtungsprobleme zwischen der Druckabstützung und der die Dichtung aufnehmenden Gehäusebohrung vermieden werden.

## Beschreibung

Die vorliegende Erfindung bezieht sich auf eine Radialwellendichtung mit einem Stützkörper und einer auf dem Stützkörper aufgezogenen Dichtmanschette, die eine Dichtmembran mit einer an einer Welle dichtend anliegenden, innerhalb der axialen Abmessungen der Radialwellendichtung angeordneten Dichtlippe aufweist, die entgegen der Druckrichtung des abzudichtenden Mediums schräg gestellt ist, wobei der Stützkörper an der die schräg gestellte Dichtlippe aufweisenden Seite der Dichtmembran angeordnet ist.

Ein Wellenabdichtungssystem mit Radialwellendichtungen ist beispielsweise in der DE 35 35 444 C2 beschrieben. Bei diesem Wellenabdichtungssystem sind mindestens drei Lippendichtungsringe axial nebeneinander angeordnet, wobei die separaten Lippendichtungsringe auf sich in axialer Richtung überlappende und ineinandergeschobene Stützkörper aufgezogen und zur besseren Anlage der Dichtlippen an der Welle die Lippendichtungsringe mit Schraubenfederringen versehen sind.

Des weiteren sind aus der DE 42 09 953 A1 Radialwellendichtungen bekannt, bei denen zur Abdichtung von Wellen, die bei höherem Lastzustand der angeschlossenen Kraftmaschine zu Schwingungen angeregt werden, innerhalb der Dichtungsanordnung Wälzlager zur Verbesserung der Führung der abzudichtenden Welle angeordnet sind.

Durch die unter der Druckkraft von Federringen an der Welle anliegenden Dichtlippen können jedoch verstärkt Einlaufriefen an der Welle erzeugt werden. Des weiteren ist die Anordnung der Federringe aufwendig. Es werden daher oftmals Radialwellendichtungen eingesetzt, bei denen winkelförmig ausgebildete Dichtmanschetten auf Stützkörper unter Vorspannung aufgezogen werden, so daß die derart erzeugten Spannungen im Membranteil den Schubspannungen, die sich bei rotierender Welle im Dichtlippenbereich ergeben, entgegenwirken.

So sind aus der DE-U 88 12 628 Radialwellendichtringe bekannt, bei denen der ringförmige Stützkörper in einer eingeformten Eindrehung der Dichtmanschette angeordnet ist, wobei die Dichtmanschette unter Vorspannung auf den Stützkörper aufgezogen ist. Hierdurch werden gegenüber rohrförmigen Stützkörpern begrenzte Einbaubreiten erhalten, und durch Ausübung eines axialen Druckes auf die Dichtmanschette wirken diese statisch stirnflächenabdichtend.

Der DE-U 89 10 452 sind Radialwellendichtungen zu entnehmen, bei denen die Dichtung sehr hohe Druckbelastungen bei relativ geringen Schubbelastungen und geringen Verlustleistungen dadurch aufzunehmen in der Lage ist, daß die scheibenförmige Dichtmembran eine ringförmige Verlängerung mit einer Stützkante aufweist, deren Innendurchmesser in unbelastetem Zustand der Ringwellendichtung etwas größer ist als der Innendurchmesser der Dichtkante der Dichtlippe.

Des weiteren sind der Konstruktionsmappe "Radial-Wellendichtringe" der Firma Domsel GmbH, Kreuzau-Üdingen, Seiten 1-5, 1992, gattungsgemäße Radialwellendichtungen zu entnehmen, die mit Radialwellendichtungen, bei denen die an der Welle dichtend anliegende Dichtlippe außerhalb der axialen Abmessungen der Radialwellendichtung angeordnet ist, in vielfältiger Weise kombiniert sind. Die jeweils auf einen getrennten Stützkörper unter Vorspannung aufgezogenen Dichtmanschetten sind dabei in ihren radialen Abmessungen so gestaltet, daß sie in axialer Richtung ineinanderschiebbar sind und so ein geeignetes Dichtungssystem aufgebaut werden kann.

Durch Schrägstellung der Dichtlippe entgegen der Druckrichtung des abzudichtenden Mediums wird eine dichtende Anlage der Dichtlippe an die Welle erreicht. Zur zuverlässigen Verhinderung von Undichtigkeiten ist jedoch zur Abdichtung von unter Druck stehenden Medien eine Abstützung der Dichtlippe vorzunehmen. Bisher bekannte Radialwellendichtungen mit innerhalb der axialen Abmessungen der Radialwellendichtung angeordneter Dichtlippe weisen jedoch für die nach innen gestellte Dichtlippe keine direkte Abstützung auf. Es wird vielmehr, sofern dies erforderlich erscheint und einfach durchführbar ist, die Abstützung der nach innen gestellten Dichtlippe durch eine der Dichtung vorgeschaltete Scheibe erzielt, die vor Einsetzen der Radialwellendichtung in die entsprechende Aufnahmeöffnung (Gehäusebohrung oder dergleichen) einmontiert werden muß. Dies erfordert jedoch zusätzliche separate Bauteile und damit einen erhöhten Montageaufwand sowie Abdichtungsprobleme, da die Positionierung von Scheibe und Radialwellendichtung aufeinander abzustimmen ist. Darüber hinaus ist nicht nur der Übergang von der Dichtung zur Welle, sondern auch der Übergang zu dem die Dichtung aufnehmenden Gehäuse abzudichten. Die Abdichtung des Übergangs von der Radialwellendichtung auf das Gehäuse ist jedoch insbesondere dann problematisch, wenn zur Druckabstützung der Dichtlippe Metallkappen verwendet werden (siehe beispielsweise die Konstruktionsmappe "Radial-Wellendichtringe" der Firma Domsel GmbH), die über dem Dichtungsteil, d. h. dieses radial umgebend, montiert sind, da die Abdichtung der Dichtung gegenüber dem Gehäuse wegen der Paßgenauigkeit der Metallkappe zur Aufnahmebohrung der Dichtung kritisch ist.

Des weiteren kann eine Druckabstützung einer innerhalb der axialen Abmessung der Radialwellendichtung angeordneten Dichtlippe direkt durch die Außenwandung des Gehäuses erfolgen. Hierzu ist es jedoch notwendig, eine Dichtringaufnahmebohrung vorzusehen, die einen derartigen Absatz aufweist, daß die zur Welle hinweisende Abschlußkante des Absatzes bis nahe an den Wellenumfang geführt ist, um so eine ausreichende Abstützwirkung durch die Stirnfläche der abgesetzten Bohrung zu erreichen. Eine derartige Abstützung der Dichtlippe ist jedoch nur bei bestimmten konstruktiven Gegebenheiten möglich.

Des weiteren ist bei den bisher bekannten, unter Vorspannung auf Stützkörper aufgezogenen winkelförmigen Dichtmanschetten nachteilig, daß diese oftmals aufgrund der einseitigen Vorspannung, die durch das einseitige Aufziehen der Dichtmanschette auf einen Stützkörper erzeugt wird, von dem Stützkörper abgleiten. Hierdurch entstehen unterschiedliche Dichtlippendurchmesser mit unterschiedlichen auf die Welle wirkende Radialkräfte, so daß keine gleichmäßig abdichtend an der Welle anliegende Dichtlippe mehr vorliegt. Dies kann jedoch zu ungleichmäßiger Abdichtung sowie zu ungleichmäßigem Verschleiß der Dichtlippe bei rotierender Welle führen. Insbesondere bei Einsatz von Kleinstmotoren oder Drehgebern ist jedoch eine gleichmäßig an der Welle anliegende Dichtlippe von entscheidender Bedeutung.

Der vorliegenden Erfindung liegt somit die Aufgabe zugrunde, eine Radialwellendichtung zu schaffen, die unabhängig von der Form der die Radialwellendichtung aufnehmenden Aufnahmebohrung ist, die einfach zu montieren ist und insbesondere keiner zusätzlichen, vor Einbau der Dichtung in die Gehäuseaufnahme einzulegenden Hilfsmittel wie Scheiben und dergleichen bedarf und die eine zuverlässige Abdichtung gewährleistet.

Erfindungsgemäß wird die Aufgabe dadurch gelöst, daß eine die Dichtmembran gegen den Mediendruck abstützende Druckabstützung vorgesehen ist, die axial fixiert an der von der Dichtlippe abgewandten Seite in der Dichtmanschette integriert ist. Hierdurch ist eine Radialwellendichtung geschaffen, die unabhängig von der besonderen Ausführung der Aufnahmebohrung eine stets definierte und zuverlässige, nicht durch Montagefehler der Druckabstützung beeinträchtigte Abdichtung gewährleistet und die als kompaktes Bauteil besonders einfach montierbar ist. Insbesondere wird durch die Anordnung des Stützkörpers auf der die Dichtlippe aufweisenden Seite der Dichtmembran und die gleichzeitige Anordnung der in der Dichtmanschette integrierten Druckabstützung auf der von der Dichtlippe abgewandten Seite die Dichtmembran beidseitig abgestützt und ein Abrutschen derselben von dem Stützkörper sicher verhindert.

Vorteilhafterweise ist die Druckabstützung scheibenförmig ausgebildet.

Vorteilhafterweise erfolgt die axiale Fixierung des Stützkörpers und/oder der Druckabstützung mittels den Stützkörper und/oder die Druckabstützung außenseitig um- und hintergreifender Bereiche der Dichtmanschette. Die Dichtmanschette kann dabei insbesondere ein T-förmiges Profil aufweisen, bei dem der mittlere Schenkel die Dichtmembran bildet und die jeweils seitlich zu diesem angeordneten Schenkel den Stützkörper sowie die Druckabstützung außenseitig umgreifen. Insbesondere ist es vorteilhaft, die vom mittleren Schenkel abgehenden seitlichen Schenkel ringförmig auszubilden.

Bei entsprechender Ausführung der Dichtmanschette kann die Wirklinie der abdichtend an der Welle anliegenden Dichtlippe innerhalb der Dichtringbreite durch Wahl entsprechend bemessener axialer Ausdehnungen von Stützkörper und/oder Druckabstützung bei in axialer Richtung deformierbarer Dichtmanschette so eingestellt werden, daß die Lage der Wirklinie den gegebenen Anforderungen entspricht. Insbesondere kann es vorteilhaft sein, die Dichtlippe so anzuordnen, daß sie einen Abstand zur halben Dichtringbreite aufweist, d. h. außerhalb der durch die axialen Abmessungen der Radialwellendichtung gegebenen Mittelebene derselben verläuft. Hierdurch ist im Rahmen von Revisionsarbeiten die erfindungsgemäße Radialwellendichtung auch dann ohne weiteres einsetzbar, wenn auf der Welle Einlaufspuren vorhanden sind, die durch die ursprünglich vorgesehene Dichtung bei zu hohem Anpreßdruck der Dichtlippe auf die Welle erzeugt werden. Da die Wirklinie der Dichtlippe der erfindungsgemäßen Radialwellendichtung innerhalb der axialen Abmessungen der Radialwellendichtung einstellbar ist, kann sie auf einfache Weise so positioniert werden, daß sie nicht deckungsgleich mit der in der Welle vorliegenden Einlaufspur verläuft. Eine aufwendige Nachbearbeitung der Welle ist somit entbehrlich.

Vorteilhafterweise ist die Dichtmanschette sowohl auf den Stützkörper als auch der Druckabstützung unter axialer und radialer Vorspannung aufgezogen, so daß Stützkörper und Druckabstützung unter axialem Druck auf die zwischen diesen angeordnete Dichtmembran einwirken. Eine derartige Vorspannung ist insbesondere durch Abstimmung der Dimensionierung der Bauteile unter Verwendung von Dichtmanschetten aus elastischen Werkstoffen möglich. Durch die axiale und radiale Vorspannung der Dichtmanschette wird die zwischen Stützkörper und Druckabstützung angeordnete Dichtmembran besonders stabilisiert sowie eine besonders formstabile Radialwellendichtung geschaffen.

Dabei ist eine besonders einfache Ausführungsform gegeben, wenn Stützkörper und Druckabstützung den gleichen Außendurchmesser aufweisen.

Des weiteren ist es vorteilhaft, die Dichtlippe mit einer vorderseitigen und einer rückseitigen Dichtkante zu versehen, so daß bei Druckbelastung auf die Dichtlippe ein flächiges Anlegen der Dichtlippe an die Welle vermieden wird.

Des weiteren ist es vorteilhaft, die Druckabstützung so auszugestalten, daß die der Druckabstützung benachbarte Dichtkante durch die Druckabstützung abstützbar ist. Dies kann durch Anordnung einer Bohrung in der Druckabstützung erfolgen, deren Durchmesser bis auf einen notwendigen Abstand dem Wellendurchmesser entspricht. Hierdurch wird ein flaches Aufliegen der Dichtlippe auf der Welle und ein Einziehen (Extrusion) der Dichtlippe in den Spalt zwischen Welle und Bohrung der Druckabstützung weiter erschwert. Insbesondere ist in dieser Ausführungsform bei geringerem Abrieb des Dichtungsmaterials eine höhere Druckbelastbarkeit der Dichtung gegeben.

Der Stützkörper der Radialwellendichtung kann als Winkelring ausgeführt sein, wobei der horizontale Schenkel des Winkelringes der Dichtmembran zugewandt ist. Hierdurch wird der vertikale Schenkel des Winkelrings von der Dichtmembran beabstandet, so daß der zwischen diesen ausgebildete Raum als Stauraum wirkt und auch bei dynamischer Anströmung der Dichtlippe durch Medien im Abdichtungsbereich der Dichtlippe ein quasi statischer Druckraum gebildet wird.

Des weiteren kann es vorteilhaft sein, den Stützkörper als Winkelring auszuführen, wobei der horizontale Schenkel des Winkelrings der Dichtmembran abgewandt ist. Hierdurch kann der vertikale Schenkel des Winkelsrings an der Dichtmembran anliegend angeordnet sein, so daß die Dichtmembran von Stützkörper und Druckabstützung beidseitig optimal abgestützt wird und eine besonders stabile Anordnung der Dichtlippe an der Welle geschaffen ist.

Stützkörper und Druckabstützung sind jedoch nicht auf die bisher beschriebenen Geometrien festgelegt. So ist bei Bedarf auch die Druckabstützung winkelförmig oder der Stützring U-förmig oder die beiden starren Formkörper in anderen Geometrien ausführbar.

Die Radialwellendichtung kann eine zweite Dichtmembran mit einer zweiten Dichtlippe aufweisen.

Dabei kann insbesondere die zweite Dichtmembran mit der zweiten Dichtlippe zum abzudichtenden Medium hin angeordnet sein und die zweite Dichtlippe an der zum abzudichtenden Medium weisenden Seite der Radialwellendichtung schräg gestellt vorstehen. Eine derartige als Zweilippendichtung ausgeführte Radialwellendichtung ist insbesondere für den Einsatz in Wasserpumpen und für das Abdichten von Waschmaschinen geeignet.

Eine besonders einfache Ausführungsform einer derartigen Zweilippendichtung liegt vor, wenn der Stützkörper der ersten Dichtmembran gleichzeitig den Stützkörper der zweiten Dichtmembran bildet. Weist die zweite Menmbran eine nach außen gestellte Dichtlippe auf, so ist der Stützkörper der zweiten Membran in Druckrichtung des Mediums hinter der zweiten Membran, also zwischen der ersten und der zweiten Membran, angeordnet. Er bildet somit zugleich die Druckabstützung der zweiten Membran.

Des weiteren kann die Radialwellendichtung mit einer die Radialwellendichtung gegen das die Dichtung aufnehmende Bauteil abdichtenden, einen sich radial nach außen erstreckenden Wulst aufweisenden "oberen" Dichtmembran versehen sein. Hierbei kann die "obere" Dichtmembran durch die die nach außen gestellte Dichtlippe aufweisende Dichtmembran aufgespannt sein, so daß sie dichtend gegen das die Radialwellendichtung aufnehmende Bauteil anliegt.

Dabei kann die in der Dichtmanschette axial fixierte und integriert einmontierte Druckabstützung innerhalb der "oberen" Dichtmembran, die ebenfalls als Spannmembran ausgeführt ist, integriert sein.

Eine vorteilhafte Ausführungsform ist gegeben, wenn die "obere" Dichtmembran von der an das abzudichtende Medium angrenzenden Dichtmembran durch eine schlitzartige Ausnehmung abgetrennt ist. Die schlitzförmige Ausnehmung kann sich in axialer Richtung bis zu dem Ende des Stützkörpers hin erstrecken, der dem abzudichtenden Medium abgewandt ist, wobei der Stützkörper die an das abzudichtende Medium angrenzende Dichtmembran abstützt.

Die erfindungsgemäße Radialwellendichtung ist in der Zeichnung beispielhaft veranschaulicht und im nachstehenden im einzelnen anhand der Figuren beschrieben. Es zeigen:
- Fig. 1: einen Radialwellendichtring mit integrierter Druckabstützung,
- Fig. 2: eine weitere Ausführungsform einer erfindungsgemäßen Radialwellendichtung mit integrierter Druckabstützung, und
- Fig. 3: einen Radialwellendichtring mit integrierter Druckabstützung und mit einer zweiten, eine nach außen gestellte Dichtlippe aufweisenden Membran.

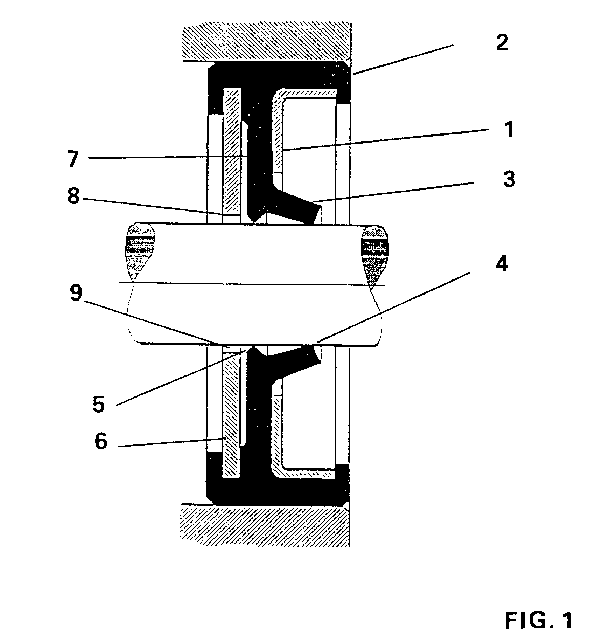

Fig. 1 zeigt einen Radialwellendichtring mit einem Stützkörper 1, über dem eine Dichtmanschette 2 unter Vorspannung aufgezogen ist. Die Dichtmanschette 2 weist eine Dichtmembran 7 auf, an die eine nach innen gestellte, d. h. innerhalb der axialen Abmessung der Radialwellendichtung angeordnete Dichtlippe 3 angeformt ist. Die Dichtlippe 3 ist mit einer vorderen Dichtkante 4 und mit einer rückseitigen Dichtkante 5 versehen, wobei die Dichtkante 5 ein flaches Anlegen der vorderen Dichtkante 4 unter Mediendruck an die Welle verhindert. Innerhalb der Dichtmanschette 2 ist eine Druckabstützung 6 unter axialer Fixierung einmontiert, wobei die Druckabstützung 6 die rückseitige Dichtkante 5 abstützt und so ein flächiges Anlegen der Dichtlippe 3 an die Welle zusätzlich erschwert. Die Druckabstützung 6 ist dabei als Lochscheibe ausgebildet, deren innerer Durchmesser 8 bis auf einen notwendigen Abstand 9 an den Außendurchmesser der Welle geführt ist. Hierdurch ist eine optimale Druckabstützung der Dichtkanten gegeben.

Der Stützkörper 1 ist dabei winkelförmig ausgeführt, wobei der horizontale Schenkel desselben von der die Dichtlippe 3 tragenden, senkrecht zur Welle angeordneten Dichtmembran 7 beabstandet angeordnet ist, und der vertikale Schenkel des Stützkörpers 1 an der Dichtmembran 7 anliegt. Dadurch, daß die Dichtmanschette 2 unter axialer als auch unter radialer Vorspannung auf den Stützkörper 1 sowie auf die Druckabstützung 6 aufgezogen ist, liegt der vertikale Schenkel des Stützkörpers 1 unter axialem Druck an der Dichtmembran an. Hierdurch wird die zwischen dem Stützkörper 1 und der Druckabstützung 6 angeordnete Dichtmembran 7 beidseitig von den starren Bauteilen abgestützt, so daß eine exakte örtliche Positionierung der Dichtlippe 3 auch bei wechselndem Druck des an der Dichtlippe 3 anliegenden Mediums gewährleistet ist. Es liegt somit eine einteilige, leicht montierbare Radialwellendichtung vor.

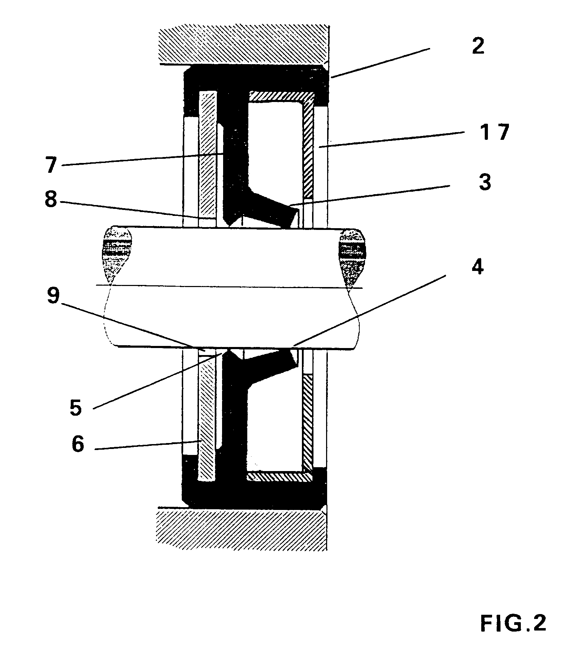

Die in Fig. 2 gezeigt Ausführungsform der erfindungsgemäßen Radialwellendichtung, die im übrigen derjenigen von Fig. 1 entspricht, weist einen winkelförmigen Stützkörper 17 auf, dessen horizontaler Schenkel der Dichtmembran 7 zugewandt und dessen vertikaler Schenkel der Dichtmembran 7 abgewandt ist. Hierdurch wirkt der vertikale Schenkel des Stützkörpers als Spritzblech, das mit der Dichtmembran 7 einen Raum einschließt, so daß auch bei ungleichmäßiger Anströmung der Dichtung durch das abzudichtende Medium vor der Dichtlippe ein quasi statischer Druckraum gebildet wird, wodurch die auf die Dichtlippe einwirkenden Kräfte besser beherrschbar sind.

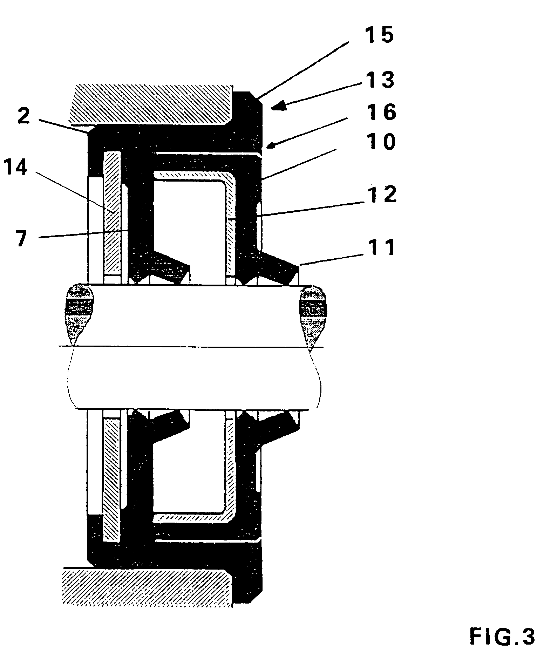

In Fig. 3 ist eine als Zweilippendichtung ausgeführte Radialwellendichtung mit in der Dichtmanschette 2 einmontierter und axial fixierter Druckabstützung dargestellt. Die Anordnung der Dichtmembran 7 zwischen Druckabstützung 14 und Stützkörper 12 entspricht dabei der Ausführungsform in Fig. 2. Zusätzlich weist die dem abzudichtenden Medium zugewandte Dichtmembran 10 eine nach außen gestellte, d. h. eine außerhalb der axialen Abmessung der Radialwellendichtung angeordnete Dichtlippe 11 auf. Dabei ist die dem abzudichtenden Medium zugewandte Dichtmembran 10 mittels des Stützkörpers 12 abgestützt, der zugleich den die nach innen gestellte Dichtlippe gemäß dem Ausführungsbeispiel nach Fig. 1 abstützenden Stützkörper bildet. Über die mittels des Stützkörpers 12 abgestützte, die nach außen gestellte Dichtlippe 11 aufweisende Dichtmembran 10 wird zugleich die obere Dichtmembran 13 aufgespannt, die einen sich radial nach außen erstreckenden Wulst 15 aufweist und die die Dichtung gegenüber dem die Dichtung aufnehmenden Bauteil abdichtet. Die axial fixierte, innerhalb der Dichtmanschette einmontierte Druckabstützung 14 ist dabei zugleich innerhalb der oberen Spannmembran 13 integriert. Dabei ist die obere Dichtmembran 13 durch einen ringförmigen, sich in axialer Richtung der Druckmanschette 2 ausdehnenden Schlitz 16 von der unteren Dichtmembran 10 getrennt, so daß auch bei einteiliger Ausführung der Radialwellendichtung die auf die gegen die Welle dichtend anliegenden Dichtlippen von dem Teil der Dichtung, der die Radialwellendichtung gegenüber dem diese aufnehmenden Bauteil abdichtet, entkoppelt werden. Durch Anordnung des Schlitzes 16 werden die auf die auf unterschiedlichen Seiten des Schlitzes 16 angeordneten Dichtlippen einwirkenden Druckkräfte abgelenkt und nicht direkt auf die auf der gegenüberliegenden Seite des Schlitzes 16 angeordneten Dichtlippen übertragen. Die Länge des Schlitzes 16 ist dabei so bemessen, daß er auf Höhe des Endes des vertikalen Schenkels des Stützkörpers 12 abschließt. Hiermit liegt eine Zweilippendichtung vor, die einteilig ausgeführt ist und damit einfach montierbar als auch zuverlässig sowohl gegenüber der Welle als auch gegenüber dem die Dichtung aufnehmenden Bauteil abdichtet.

Die erfindungsgemäße Radialwellendichtung kann dadurch mannigfaltig weitergebildet werden, daß weitere Dichtmembranen vorgesehen werden, wobei die an den Dichtmembranen angeordneten Dichtlippen innerhalb oder außerhalb der axialen Abmessungen der Radialwellendichtung angeordnet werden können und die schräg gestellten Dichtlippen sowohl in Richtung auf als auch entgegen der Druckrichtung des abzudichtenden Mediums angeordnet werden können. So können beispielsweise mehrere nach innen gestellte Dichtlippen vorgesehen werden als auch Dichtmembranen beiderseits einer Druckabstützung angeordnet werden, so daß diese auch bei Wechseln der Druckseite stets eine Dichtmembran rückseitig abstützen. Des weiteren können auch Dichtungssysteme ausgebildet werden, die mehrere in axialer Richtung überlappende Stützkörper aufweisen.

### Bezugszeichenliste

1 Stützkörper
2 Dichtmanschette
3 Dichtlippe
4 vordere Dichtkante
5 rückseitige Dichtkante
6 Druckabstützung
7 Dichtmembran
8 innerer Durchmesser der Druckabstützung
9 Abstand
10 Dichtmembran
11 nach außen gestellte Dichtlippe
12 Stützkörper
13 obere Dichtmembran
14 Druckabstützung
15 Wulst
16 Schlitz
17 Stützkörper

## Patentansprüche

1. Radialwellendichtung mit einem Stützkörper und einer auf dem Stützkörper aufgezogenen Dichtmanschette, die eine Dichtmembran mit einer an einer Welle dichtend anliegenden, innerhalb der axialen Abmessung der Radialwellendichtung angeordneten Dichtlippe aufweist, die entgegen der Druckrichtung des abzudichtenden Mediums schräg gestellt ist, wobei der Stützkörper an der die schräg gestellte Dichtlippe aufweisenden Seite der Dichtmembran angeordnet ist, **dadurch gekennzeichnet,** daß eine die Dichtmanschette (2) gegen den Mediendruck abstützende Druckabstützung (6) vorgesehen ist, die axial fixiert an der von der Dichtlippe (3) abgewandten Seite in der Dichtmanschette (2) integriert ist.

2. Radialwellendichtung nach Anspruch 1, **dadurch gekennzeichnet,** daß die Druckabstützung (6) scheibenförmig ausgebildet ist.

3. Radialwellendichtung nach Anspruch 1 oder 2, **dadurch gekennzeichnet,** daß die axiale Fixierung des Stützkörpers (1) und/oder der Druckabstützung (6) mittels den Stützkörper (1) und/oder die Druckabstützung (6) außenseitig um- und hintergreifender Bereiche der Dichtmanschette (2) erfolgt.

4. Radialwellendichtung nach einem der Ansprüche 1 bis 3 , **dadurch gekennzeichnet,** daß die Dichtmanschette (2) ein T-förmiges Profil aufweist.

5. Radialwellendichtung nach einem der Ansprüche 1 bis 4, **dadurch gekennzeichnet**, daß die Dichtlippe (3) in unterschiedlicher axialer Position innerhalb der axialen Abmessung der Radialwellendichtung positionierbar ist.

6. Radialwellendichtung nach einem der Ansprüche 1 bis 5, **dadurch gekennzeichnet,** daß die Dichtmanschette (2) sowohl auf dem Stützkörper (1) als auch auf der Druckabstützung (6) unter axialer und radialer Vorspannung aufgezogen ist.

7. Radialwellendichtung nach einem der Ansprüche 1 bis 6, **dadurch gekennzeichnet,** daß Stützkörper (1) und Druckabstützung (6) den gleichen Außendurchmesser aufweisen.

8. Radialwellendichtung nach einem der Ansprüche 1 bis 7, **dadurch gekennzeichnet**, daß die Dichtlippe (3) eine vorderseitige Dichtkante (4) und eine rückseitige Dichtkante (5) aufweist.

9. Radialwellendichtung nach einem der Ansprüche 1 bis 8, **dadurch gekennzeichnet**, daß die der Druckabstützung (6) benachbarte Dichtkante durch die Druckabstützung (6) abstützbar ist.

10. Radialwellendichtung nach einem der Ansprüche 1 bis 9, **dadurch gekennzeichnet**, daß der Stützkörper (1) als Winkelring ausgeführt ist und der horizontale Schenkel des Winkelrings der Dichtmembran (7) zugewandt ist.

11. Radialwellendichtung nach einem der Ansprüche 1 bis 9, **dadurch gekennzeichnet**, daß der Stützkörper (17) als Winkelring ausgeführt ist und der horizontale Schenkel des Winkelrings der Dichtmembran (7) abgewandt ist.

12. Radialwellendichtung nach einem der Ansprüche 1 bis 11, **dadurch gekennzeichnet**, daß eine zweite Dichtmembran (10) mit einer zweiten Dichtlippe (11) vorgesehen ist.

13. Radialwellendichtung nach Anspruch 12, **dadurch gekennzeichnet**, daß die zweite Dichtmembran (10) mit der zweiten Dichtlippe (11) zum abzudichtenden Medium hin angeordnet ist und die zweite Dichtlippe (11) an der zum abzudichtenden Medium hin weisenden Seite der Radialwellendichtung schräg gestellt vorsteht.

14. Radialwellendichtung nach Anspruch 12 oder 13, **dadurch gekennzeichnet,** daß der Stützkörper (12) der ersten Dichtmembran gleichzeitig den Stützkörper der zweiten Dichtmembran (10) bildet.

15. Radialwellendichtung nach einem der Ansprüche 12 bis 14, **gekennzeichnet durch** eine die Radialwellendichtung gegen das die Dichtung aufnehmende Bauteil abdichtende obere Dichtmembran (13).

16. Radialwellendichtung nach einem der Ansprüche 12 bis 15, **dadurch gekennzeichnet**, daß die obere Dichtmembran (13) von der an das abzudichtende Medium abgrenzenden Dichtmembran durch eine schlitzförmige Ausnehmung (16) abgetrennt ist.

17. Radialwellendichtung nach Anspruch 16, **dadurch gekennzeichnet**, daß die schlitzförmige Ausnehmung (16) sich in axialer Richtung bis zum dem abzudichtenden Medium abgewandten Ende des Stützkörpers (12) hin erstreckt, welcher die an das abzudichtende Medium angrenzende Dichtmembran abstützt.
